(19) Europäisches Patentamt
European Patent Office
Office européen des brevets

(11) EP 1 347 002 B1

# (12) EUROPÄISCHE PATENTSCHRIFT

(45) Veröffentlichungstag und Bekanntmachung des Hinweises auf die Patenterteilung:
**02.05.2007 Patentblatt 2007/18**

(51) Int Cl.:
***C08F 236/00*** (2006.01) ***C08F 236/06*** (2006.01)
***C08F 212/00*** (2006.01) ***C08F 212/08*** (2006.01)
***C04B 24/26*** (2006.01)

(21) Anmeldenummer: **03003881.4**

(22) Anmeldetag: **21.02.2003**

## (54) Polymerdispersionen als Zusatz in Baumaterialien

Polymer dispersions as an additive for building materials

Dispersions de polymères comme additif pour des materiaux de construction

(84) Benannte Vertragsstaaten:
**AT BE BG CH CY CZ DE DK EE ES FI FR GB GR HU IE IT LI LU MC NL PT SE SI SK TR**

(30) Priorität: **22.03.2002 DE 10213026**

(43) Veröffentlichungstag der Anmeldung:
**24.09.2003 Patentblatt 2003/39**

(73) Patentinhaber: **BASF Aktiengesellschaft**
**67056 Ludwigshafen (DE)**

(72) Erfinder:
- **Koppers, Markus, Dr.**
  **29683 Bad Fallingbostel (DE)**
- **Pakusch, Joachim, Dr.**
  **67346 Speyer (DE)**
- **Anders, Hermann**
  **67149 Meckenheim (DE)**
- **Schmidt, Marco**
  **68159 Mannheim (DE)**
- **Denu, Hans-Jürgen**
  **67159 Friedelsheim (DE)**

(56) Entgegenhaltungen:
**EP-A- 0 924 241** **EP-A- 1 086 934**
**EP-A- 1 182 179**

- **PATENT ABSTRACTS OF JAPAN Bd. 018, Nr. 568 (C-1266), 31. Oktober 1994 (1994-10-31) & JP 06 207136 A (SUMITOMO DOW LTD), 26. Juli 1994 (1994-07-26)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die vorliegende Erfindung betrifft Polymerdispersionen, enthaltend wenigstens ein Copolymerisat, das als Monomere

a) 25 bis 70 Gew.-% wenigstens eines konjugierten aliphatischen Diens,

b) 25 bis 70 Gew.-% wenigstens eines vinylaromatischen Monomeren,

c) 0,1 bis 10 Gew.-% wenigstens eines Alkylpolyethylenglykol(meth)acrylats der Formel (I)

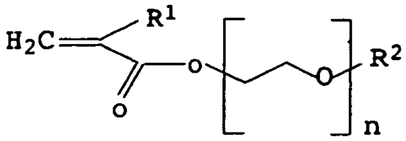

(I),

wobei $R^1$ für ein Wasserstoffatom oder eine Methylgruppe, $R^2$ für eine $C_1$-$C_4$-Alkylgruppe und n für eine ganze Zahl von 1 bis 100 steht oder

c') 2 bis 15 Gew.-% eines Gemisches aus dem Monoester eines $C_2$-$C_{10}$-Alkandiols mit Acrylsäure oder Methacrylsäure und dem Alkylpolyethylenglykol(meth)acrylat c),

d) 0 bis 1,0 Gew.-% ethylenisch ungesättigter Monomere, die wenigstens eine Säuregruppe aufweisen, oder deren Salze,

e) 0 bis 5,0 Gew.-% ethylenisch ungesättigter Nitrile und

f) 0 bis 1,0 Gew.-% Amide $\alpha,\beta$-ethylenisch ungesättigter Mono-und Dicarbonsäuren

einpolymerisiert enthält.

Weiterhin betrifft die vorliegende Erfindung die Verwendung der erfindungsgemäßen Polymerdispersionen als Zusatz in Baumaterialien sowie ein Verfahren zur Verbesserung der mechanischen Festigkeit, Elastizität und Verarbeitbarkeit von Baumaterialien.

Unter hydraulischen Bindemitteln versteht man mineralische Substanzen, die zusammen mit Wasser und gegebenenfalls Zuschlagsstoffen und üblichen Hilfsmitteln zu einer im feuchten Zustand plastischen Masse verarbeitet werden, die sich beim Selbstüberlassen an der Luft oder auch unter Wasser, gegebenenfalls unter Einwirkung erhöhter Temperatur, nach einer gewissen Zeit steinartig verfestigt. Beispiele für hydraulischen Bindemittel sind Zement, Gips, Kalk und Ton.

Die Verwendung von Polymerdispersionen oder den aus diesen erhältlichen Polymerpulvern oder -granulaten zur Verbesserung der Eigenschaften von Baumaterialien auf Basis hydraulischer Bindemittel ist grundsätzlich bekannt. Polymerdispersionen für die Verwendung mit hydraulischen Bindemitteln weisen in der Regel einen hohen Anteil an polaren und/oder ionischen Hilfsmonomeren, wie (Meth)acrylsäure und (Meth) acrylamid und einen hohen Gehalt an Emulgatoren auf. Diese Maßnahmen sollen die Stabilität der Dispersionen in Gegenwart der hydraulischen Bindemittel verbessern, da der hohe Elektrolytgehalt der hydraulischen Bindemittel zu einer starken Destabilisierung von dispersen Systemen führt.

Zur Erhöhung der mechanischen Festigkeit von Baumaterialien auf Basis hydraulischer Bindemittel in ausgehärtetem Zustand werden häufig Polymerdispersionen eingesetzt, deren Polymere eine hohe Glasübergangstemperatur ($T_g$) aufweisen. So beschreibt die EP-A-537 411 die Verwendung von Polymerdispersionen mit einer $T_g$ > +30 °C als Zusatz zu Zement. Der Zusatz soll die Festigkeit zementgebundener Massen verbessern und die offene Zeit verlängern.

Baumaterialien auf Basis hydraulischer Bindemittel, die derartige Polymerdispersionen enthalten, sind vergleichsweise spröde und zeigen insbesondere eine geringe Tieftemperaturflexibilität. Dies ist vermutlich darauf zurückzuführen, dass aufgrund der hohen $T_g$ des Polymers keine Verfilmung der Latexteilchen in den Baumaterialien stattfindet.

Zur Verringerung der Sprödigkeit und zur Erhöhung der Tieftemperaturflexibilität ausgehärteter Baumaterialien auf Basis hydraulischer Bindemittel werden daher Polymerdispersionen eingesetzt, die Polymere mit niedriger $T_g$ enthalten. So beschreibt die AT-359 904 die Verwendung von Polymerdispersionen mit einer $T_g$ von -70 bis -8 °C als Zusatz für zementhaltige Baustoffe. Durch Zusatz von 3 bis 35 Gew.-% derartiger Dispersionen sollen Mörtel erhalten werden,

die nach Erhärtung eine hohe Tieftemperaturflexibilität besitzen. Jedoch führt der Zusatz dieser Dispersionen zu Baumaterialien mit geringer Festigkeit.

Aus der JP-A 53134823 ist eine Polymerdispersion bekannt, welche u.a. aus konjugierten Dienen, Monomeren wie Styrol, Acrylnitril sowie Estern der Acrylsäure bzw. der Methacrylsäure und aus ungesättigten Estern von Carbonsäuren mit Hydroxygruppen besteht. Die dort beschriebenen Polymerdispersionen werden zur Modifizierung zementäre Systeme beschrieben, welche vorzugsweise als nicht blutende Unterwasserbetone Verwendung finden. Dabei werden pro 100 Gew.-Teile Zement 8 bis 40 Gew.-Teile der Polymerdispersion eingesetzt. Die in dieser Anmeldung aufgeführten Zusammensetzungen werden alle mit einem Anteil an Initiator bezogen auf die Monomere hergestellt, welcher 0,125 mol-% nicht übersteigt. Aufgrund des relativ geringen Initiatoranteils und des relativ hohen Säureanteils sind die dort beanspruchten Zusammensetzungen insbesondere in zementären Dichtungsschlämmen nur schlecht verarbeitbar.

Gegenstand der älteren Anmeldung DE-A 10040825.7 ist die Verwendung von ammoniak-freien Polymerdispersionen als Zusatz in Baumaterialien auf Basis hydraulischer Bindemittel. Die dort beschriebenen Polymerdispersionen enthalten als Monomere u.a. 40 bis 80 Gew.-% eines Esters der Acrylsäure, 10 bis 40 Gew.-% eines vinylaromatischen Monomers sowie 2 bis 15 Gew.-% eines Monoesters eines $C_2$-$C_{10}$-Alkandiols mit Acrylsäure oder Methacrylsäure. Derartige Polymerdispersionen weisen vor allem eine hohe Scher- und Elektrolytstabilität auf und führen als Zusatz in Baumaterialien zu verbesserten mechanischen Eigenschaften dieser Baumaterialien in ausgehärtetem Zustand. Für einige Anwendungsbereiche, insbesondere für Dichtungen, zeigen die dort offengelegten Polymerdispersionen eine relativ hohe Wasseraufnahme und eine nicht ausreichende Wasserdichtigkeit.

JP-A-6 207 136 beschreibt Dispersionen für den Einsatz in wasserbasierten Farben, die stabil gegenüber Abblättern und Kälte sind. Die vorgeschlagenen Dispersionen enthalten Copolymere auf Basis aliphatischer konjugierter Diene, ethylenisch ungesättigter aliphatischer Carbonsäuren, Hydroxyalkylester ethylenisch ungesättigter aliphatischer Monocarbonsäuren und/oder Ester aliphatischer Monoalkohole, die eine Epoxygruppe enthalten, mit ethylenisch ungesättigten aliphatischen Monocarbonsäuren, sowie eines Monoolefins.

EP-A-0 924 241 offenbart ein Verfahren zur Herstellung von Polymerpulvern aus wässrigen Polymerdispersionen, wobei das dispergierte Polymerisat auf Basis von vinylaromatischen Monomeren, 1,3-Butadien und einem Monomer, welches ausgewählt wird aus ethylenisch ungesättigten Carbonsäuren, (N-Alkyl)Amiden ethylenisch ungesättigter Carbonsäuren, Hydroxyalkylester ethylenisch ungesättigter Carbonsäuren und (Meth)acrylnitril, aufgebaut ist. Die Polymerpulver werden zur Modifizierung von mineralischen Baustoffen und Baustoffzubereitungen eingesetzt.

Der vorliegenden Erfindung lag die Aufgabe zugrunde, den oben geschilderten Nachteilen abzuhelfen und verbesserte Polymerdispersionen bereitzustellen, welche u.a. eine hohe Hydrolysestabilität und Wasserdichtigkeit aufweisen und beim Zusatz zu Baumaterialien auf Basis von hydraulischen Bindemitteln zu verbesserten mechanischen Eigenschaften der Baumaterialien in ausgehärtetem Zustand, insbesondere zu einer erhöhten Reißkraft und Reißdehnung führen. Weiterhin sollen die verbesserten Polymerdispersionen gut verarbeitbar und flexibel sein.

Demgemäß wurden neuartige Polymerdispersionen gefunden, enthaltend wenigstens ein Copolymerisat, das als Monomere

a) 25 bis 70 Gew.-% wenigstens eines konjugierten aliphatischen Diens,

b) 25 bis 70 Gew.-% wenigstens eines vinylaromatischen Monomeren,

c) 0,1 bis 10 Gew.-% wenigstens eines Alkylpolyethylenglykol(meth)acrylats der Formel (I)

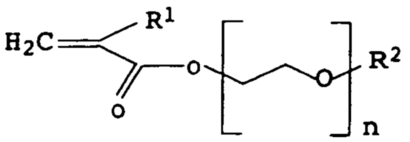

(I),

wobei $R^1$ für ein Wasserstoffatom oder eine Methylgruppe, $R^2$ für eine $C_1$-$C_4$-Alkylgruppe und n für eine ganze Zahl von 1 bis 100 steht oder

c') 2 bis 15 Gew.-% eines Gemisches aus dem Monoester eines $C_2$-$C_{10}$-Alkandiols mit Acrylsäure oder Methacrylsäure und dem Alkylpolyethylenglykol(meth)acrylat c),

d) 0 bis 1,0 Gew.-% ethylenisch ungesättigter Monomere, die wenigstens eine Säuregruppe aufweisen, oder deren Salze,

e) 0 bis 5,0 Gew.-% ethylenisch ungesättigter Nitrile und

f) 0 bis 1,0 Gew.-% Amide $\alpha,\beta$-ethylenisch ungesättigter Mono-und Dicarbonsäuren

einpolymerisiert enthält.

Weiterhin betrifft die vorliegende Erfindung die Verwendung der vorstehend definierten, wässrigen Polymerdispersionen als Zusatz in Baumaterialien auf Basis hydraulischer Bindemittel. Das in den erfindungsgemäßen Polymerdispersionen enthaltene Copolymerisat wirkt dabei als filmbildender Bestandteil. Baumaterialien auf Basis hydraulischer Bindemittel im Sinne dieser Erfindung sind sowohl die hydraulischen Bindemittel selbst, als auch Baumaterialien bzw. Baustoffe, die wenigstens 5 Gew.-%, insbesondere 10 Gew.-% und besonders bevorzugt wenigstens 25 Gew.-% wenigstens eines hydraulischen Bindemittels enthalten. Bevorzugt ist die Verwendung in Baumaterialien, die Zement als Bindemittel enthalten

Die Baumaterialien auf Basis hydraulischer Bindemittel werden im Allgemeinen durch Zusatz von Wasser (Anmachwasser) und gegebenenfalls üblichen mineralischen und/oder nichtmineralischen Zuschlägen in eine verarbeitungsfähige Form, meist in Form flüssiger oder plastisch verformbarer Massen, überführt. Diese Massen härten in der Regel beim sich Selbstüberlassen mit der Zeit aus. Typische Baumaterialien auf Basis hydraulischer Bindemittel, die so verarbeitet werden, sind Zement, Mörtel, Putze, Fliesenkleber, mineralische Dichtungsschlämme, Beton und dergleichen. Diese Baumaterialien unterscheiden sich im Wesentlichen durch die Menge und Art der enthaltenen Zuschläge und/oder den Wassergehalt bei der Anwendung am Bau.

Erfindungsgemäß wird den Baumaterialien auf Basis hydraulischer Bindemittel eine Polymerdispersion, wie hierin beschrieben, zugesetzt. Der Zusatz kann z. B. beim Überführen der Baumaterialien in die verarbeitungsfähige Form erfolgen, z. B. durch Ersetzen wenigstens eines Teils des Anmachwassers durch eine wie hier beschriebene Polymerdispersion. Die erfindungsgemäße Verwendung der Polymerdispersion kann auch in Form eines durch Trocknen der Dispersion erhaltenen Pulvers oder Granulats erfolgen. Diese Pulver oder Granulate können den Baumaterialien auf Basis hydraulischer Bindemittel sowohl in trockenem Zustand (d. h. vor der Zugabe von Wasser) als auch bei oder nach der Zugabe von Wasser zugesetzt werden.

Alle Mengenangaben bezüglich der hydraulischen Bindemittel und der Baumaterialien auf Basis hydraulischer Bindemittel beziehen sich, wenn nichts anderes erwähnt ist, auf ihren Feststoffgehalt. Der Feststoffgehalt der hydraulischen Bindemittel und der Baumaterialien auf Basis hydraulischer Bindemittel kann durch 24-stündiges Trocknen bei 120 °C bestimmt werden. Als mineralischer Anteil werden die Trockenfeststoffe der Baumaterialien ohne zugesetzte poröse Stoffe, insbesondere organische poröse Stoffe verstanden. In den meisten Fällen kann der mineralische Anteil der Baumaterialien auf Basis hydraulischer Bindemittel durch Glühen einer gegebenenfalls zerkleinerten Probe der Baumaterialien bestimmt werden.

Alle Mengenangaben, die die erfindungsgemäßen Polymerdispersionen und deren Bestandteile, insbesondere das Copolymerisat, den Emulgator sowie gegebenenfalls enthaltene Hilfsstoffe betreffen, sind als Feststoff gerechnet, sofern nichts anderes angegeben ist. Die Feststoffgehalte der Polymerdispersionen und der flüssigen Dispersionsbestandteile, z. B. der meist wässrigen Lösungen der Emulgatoren, können durch Trocknen bei 120 °C bis zur Gewichtskonstanz bestimmt werden.

Vorzugsweise liegt das in Wasser dispergierte Copolymerisat als Polymerteilchen mit mittleren Teilchengrößen im Bereich von 50 bis 1 000 nm, insbesondere 50 bis 500 nm, besonders bevorzugt 60 bis 300 nm, vor. Das Copolymerisat enthält ethylenisch ungesättigte Monomere einpolymerisiert. Die Mengenangaben der einpolymerisierten Monomere ergeben in der Summe 100 Gew.-%. Die Einstellung der mittleren Teilchengrößen erfolgt in bekannter Weise, z. B. durch Vorlage eines Saatlatex durch einen in situ zu Beginn der Polymerisation gebildeten Saatlatex, durch die Emulgatorkonzentration oder einer Kombination dieser Maßnahmen.

Das in den erfindungsgemäßen Polymerdispersionen vorliegende Copolymerisat enthält 25 bis 70 Gew.-%, insbesondere 35 bis 60 Gew.-%, wenigstens eines konjugierten aliphatischen Diens als Monomeres a). Geeignete konjugierte aliphatische Diene sind insbesondere konjugierte, aliphatische $C_4$-$C_{12}$-Diene wie beispielsweise Buta-1,3-dien oder Isopren.

Vorzugsweise enthalten die Copolymerisate als Monomere b) 25 bis 70 Gew.-% und besonders bevorzugt 35 bis 60 Gew.-% wenigstens eines einfach ungesättigten vinylaromatischen Monomers. Geeignete Vinylaromaten sind Styrol, $\alpha$-Methylstyrol, $\alpha$-Phenylstyrol, o-Chlorstyrol, Vinyltoluole und Gemische davon. Besonders bevorzugter Vinylaromat ist Styrol.

Die Monomere a) und b) (Hauptmonomere) machen zusammen in der Regel 80 bis 97,5 Gew.-%, vorzugsweise 85 bis 97,5 Gew.-% und besonders bevorzugt 90 bis 97 Gew.-% aller einpolymerisierten Monomere aus. Besonders bevorzugte Monomerkombinationen aus Monomeren b) und Monomeren a) sind die Kombinationen Styrol/1,3-Butadien und Styrol/Isopren.

Erfindungsgemäß kann das Copolymerisat als Monomer c) 0,1 bis 10 Gew.-%, insbesondere 0,5 bis 5,0 Gew.-% wenigstens eines Alkylpolyethylenglykol(meth)acrylats der allgemeinen Formel (I)

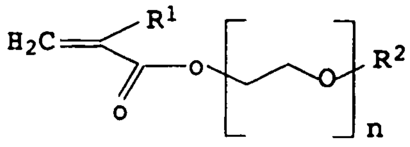

(I)

enthalten,
wobei $R^1$ für ein Wasserstoffatom oder eine Methylgruppe, $R^2$ für eine $C_1$-$C_4$-Alkylgruppe und n für eine ganze Zahl von 1 bis 100 steht.

Bevorzugt sind dabei solche Verbindungen der Formel (I), bei denen $R^2$ für eine Methylgruppe steht und n eine ganze Zahl von 5 bis 55, insbesondere von 5 bis 30 steht.

Darüber hinaus ist es auch möglich, daß das in den erfindungsgemäßen Polymerdispersionen vorliegende Copolymerisat 2 bis 15 Gew.-%, insbesondere 2 bis 10 Gew.-% eines Gemisches c') aus dem Monoester eines $C_2$-$C_{10}$-Alkandiols mit Acrylsäure oder Methacrylsäure und dem Alkylpolyethylenglykol(meth)acrylat c) enthält. In einem solchen Gemisch liegt der Anteil des Monoesters eines $C_2$-$C_{10}$-Alkandiols mit Acrylsäure oder Methacrylsäure bei 1 bis 90 Gew.-%, insbesondere bei 1 bis 50 Gew.-%, bezogen auf das gesamte Gemisch c').

Geeignete Alkandiole sind lineare $C_2$-$C_{10}$-Alkandiole, verzweigte $C_3$-$C_{10}$-Alkandiole und $C_5$-$C_{10}$-Cycloalkandiole, vorzugsweise lineare $C_2$-$C_6$-$\alpha,\omega$-Alkaniole. Beispiele für geeignete Monoester in c') sind Hydroxyethylacrylat, Hydroxyethylmethacrylat, 3-Hydroxypropylacrylat, 3-Hydroxypropylmethacrylat, 2-Hydroxypropylacrylat, 2-Hydroxypropylmethacrylat, 4-Hydroxybutylacrylat und 4-Hydroxybutylmethacrylat.

Erfindungsgemäß enthält das Copolymerisat als Monomere d) 0 bis 1,0 Gew.-% ethylenisch ungesättigte Monomere, die wenigstens eine Säuregruppe, z. B. eine Carboxylgruppe oder eine Sulfonsäuregruppe aufweisen, oder deren Salze einpolymerisiert. Vorzugsweise enthält das Copolymerisat daher entweder 0,1 bis 1,0 Gew.-%, insbesondere 0,2 bis 1 Gew.-%, insbesondere 0,2 bis 0,8 Gew.-%, wenigstens eines Monomers d) einpolymerisiert oder es ist im wesentlichen frei von einpolymerisierten Monomeren d) (Gewichtsanteil < 0,1, insbesondere < 0,05 und besonders bevorzugt < 0,01 bzw. 0 Gew.-%). Geeignet als Monomere d) sind $\alpha,\beta$-ethylenisch ungesättigte $C_3$-$C_6$-Monocarbonsäuren, wie Acrylsäure oder Methacrylsäure, und monoethylenisch ungesättigte $C_4$-$C_8$-Dicarbonsäuren, wie Maleinsäure, Fumarsäure, Itaconsäure und Citraconsäure. Geeignete Monomere d) sind weiterhin ethylenisch ungesättigte Monomere, die eine Sulfonsäuregruppe enthalten, wie Vinylsulfonsäure, 2-Acrylamido-2-methylpropansulfonsäure, 2-Acryloxyethansulfonsäure und 2-Methacryloxyethansulfonsäure, deren Salze, vorzugsweise deren Ammoniumsalze, insbesondere Ammoniumsalze von bei Raumtemperatur nicht flüchtigen Aminen, und bevorzugt deren Alkalimetallsalze, insbesondere deren Natriumsalze. Bevorzugt sind Acrylsäure und Methacrylsäure.

Die Copolymerisate enthalten ferner 0 bis 5 Gew.-% ethylenisch ungesättigte Nitrile, wie Acrylnitril oder Methacrylnitril (Monomere e)). Besonders bevorzugt sind die Copolymerisate im Wesentlichen frei von derartigen Nitrilen oder weisen diese in einer Menge von 0,1 bis höchstens 3,5 Gew.-% insbesondere von höchstens 2,0 Gew.-% auf. Ein geringer Gehalt an einpolymerisierten Nitrilen ist vorteilhaft für eine niedrige Wasseraufnahme der erfindungsgemäße modifizierten Baumaterialien.

Die Copolymerisate enthalten weiterhin 0 bis 1,0 Gew.-% Amide $\alpha,\beta$-ethylenisch ungesättigter Mono- und Dicarbonsäuren (Monomere f)). Besonders bevorzugt sind die erfindungsgemäßen Polymerdispersionen frei oder im Wesentlichen frei von Amiden von Carbonsäuren. Ein möglichst niedriger Gehalt an Amiden $\alpha,\beta$-ethylenisch ungesättigter Carbonsäuren ist vorteilhaft für die geringe Geruchsentwicklung der erfindungsgemäßen Dispersionen in Gegenwart der hydraulischen Bindemittel.

Darüber hinaus können die Copolymerisate geringe Mengen weiterer Monomere enthalten, wie sie üblicherweise bei der Herstellung wässriger Polymerdispersionen eingesetzt werden.

Geeignete weitere Comonomere sind beispielsweise Silizium enthaltende Monomere, insbesondere Silylgruppen enthaltende Monomere, wie Vinyltrialkoxysilane, z. B. Vinyltrimethoxysilan, Alkylvinyldialkoxysilane oder (Meth)acryloxyalkyltrialkoxysilane, z. B. (Meth)acryloxyethyltrimethoxysilan, (Meth)acryloxypropyltri-methoxysilan und Trimethoxysilylpropylmethacrylat, Glycidylgruppen enthaltende Monomere, insbesondere Glycidyl(meth)acrylat, Glycidylvinylether, 1,3-Diketogruppen enthaltende Monomere, insbesondere Acetoxyethyl(meth)acrylat und Diaceton(meth)acrylamid, Harnstoffgruppen enthaltende Monomere, wie Ureidoethyl(meth)acrylat, Acrylamidoglycolsäure und Methacrylamidoglycolatmethylether. Wenn diese weiteren Comonomere in den erfindungsgemäßen Polymerdispersionen enthalten sind, sind sie in der Regel in Mengen von 0,1 bis 10 Gew.-%, vorzugsweise nicht mehr als 5 Gew.-%, in den Copolymerisaten einpolymerisiert.

Die zur Anwendung kommenden Copolymerisate sind bekannt, im Handel erhältlich oder können nach bekannten Methoden hergestellt werden.

Die Herstellung der Copolymerisate erfolgt in der Regel mittels radikalischer, wässriger Emulsionspolymerisation in Gegenwart wenigstens eines radikalischen Polymerisationsinitiators und gegebenenfalls einer oder mehrerer grenzflächenaktiver Substanzen.

Die wässrige Emulsionspolymerisation kann in üblicher Weise erfolgen, z. B. wie beispielsweise in der "Encyclopedia of Polymer Science and Technology", Vol. 5, Wiley & Sons Inc., NY 1966, S. 847) beschrieben. Auch in Wasser dispergierte Copolymerisate in Form mehrphasiger Teilchen sind brauchbar. Ihre Herstellung kann z. B. durch sequentielle Verfahren, wie z. B. in der EP-A 555 959, EP-A 308 753 und EP-A 654 454 beschrieben, erfolgen.

Die Polymerisation wird in üblicher Weise in Gegenwart von Radikale bildenden Verbindungen (Initiatoren) durchgeführt. Man benötigt von diesen Verbindungen vorzugsweise 0,2 bis 5, besonders bevorzugt 0,25 bis 3 mol.-%, bezogen auf die bei der Polymerisation eingesetzten Monomeren. Übliche Initiatoren sind u.a. Natriumperoxodisulfat, oder Kaliumperoxodisulfat oder Ammoniumperoxodisulfat.

Zur Steuerung des Molekulargewichts des Copolymerisats wird üblicherweise im Beisein von das Molekulargewicht regelnden Substanzen wie Mercaptanen, z.B. n-Dodecylmercaptan oder tert.-Dodecylmercaptan, polymerisiert. Typischerweise betragen die Einsatzmengen dieser Regler, bezogen auf die Menge der zu polymerisierenden Monomeren, 0,1 bis 5, meist bis 2,5 Gew.-%. Der Regler wird üblicherweise parallel mit den Monomeren zugefahren. Zur Steuerung des Polymerisationsverlaufes ist es aber auch denkbar, den Regler unabhängig von den Monomeren zeitverzögert oder in speziellen Dosierprofilen zuzugeben.

Für die Durchführung der Emulsionspolymerisation geeignete grenzflächenaktive Substanzen sind die üblicherweise für diese Zwecke eingesetzten Schutzkolloide und Emulgatoren. Die grenzflächenaktiven Substanzen werden üblicherweise in Mengen von 0 bis 10 Gew.-%, vorzugsweise 0,1 bis 7,5 Gew.-% und insbesondere 0,5 bis 5 Gew.-%, bezogen auf die zu polymerisierenden Monomere eingesetzt.

Geeignete Schutzkolloide sind beispielsweise Polyvinylalkohole, Stärke- und Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart 1961, S. 411-420. Auch Gemische aus Emulgatoren und/oder Schutzkolloiden können verwendet werden.

Vorzugsweise wurden bei der Herstellung der Copolymerisate keine Schutzkolloide eingesetzt. Wenn die Polymerdispersionen Schutzkolloide enthalten, werden diese bevorzugt erst nach der Herstellung der Polymerdispersion zugesetzt.

Besonders bevorzugt werden als grenzflächenaktive Substanzen ausschließlich Emulgatoren eingesetzt, deren relative Molekulargewichte im Unterschied zu den Schutzkolloiden üblicherweise unter 2000 liegen. Sie können sowohl anionischer, kationischer als auch nichtionischer Natur sein. Bei den im Rahmen dieser Erfindung eingesetzten Emulgatoren handelt es sich vorzugsweise um nichtionische oder anionische Emulgatoren. Während es sich bei den nichtionischen Emulgatoren der Regel um nichtionische alkoxylierte Emulgatoren handelt, wird bei den anionischen Emulgatoren im Folgenden zwischen anionischen nicht alkoxylierten Emulgatoren und anionischen alkoxylierten Emulgatoren unterschieden.

Zu den anionischen nicht alkoxylierten Emulgatoren zählen Alkali- und Ammoniumsalze von Alkylsulfaten (Alkylrest: $C_8$-$C_{40}$) z.B. von Schwefelsäurehalbestern von $C_8$-$C_{22}$-Fettalkoholen oder von $C_8$-$C_{32}$-Oxoalkoholen, von Alkylsulfonsäuren (Alkylrest: $C_{12}$-$C_{18}$) von Sulfobernsteinsäuredi-$C_6$-$C_{25}$-alkylestern und von Alkylarylsulfonsäuren (Alkylrest: $C_6$ bis $C_{32}$) z.B. von $C_6$-$C_{32}$-Alkylphenolen. Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208.

Zu den anionischen nicht alkoxylierten Emulgatoren zählen auch Verbindungen der allgemeinen Formel II,

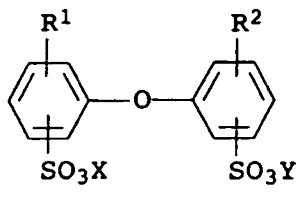

(II)

worin $R^1$ und $R^2$ Wasserstoff oder $C_4$-$C_{24}$-Alkyl bedeuten und nicht gleichzeitig Wasserstoff sind, und X und Y Alkalimetallionen und/ oder Ammoniumionen sein können. X und Y sind bevorzugt Natrium, Kalium oder Ammonium, wobei Natrium besonders bevorzugt ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company). Die Verbindungen II sind allgemein bekannt, z. B. aus der US-A 4,269,749, und im Handel erhältlich.

Vorteilhaft für die erfindungsgemäße Verwendung sind Polymerdispersionen, die alkoxylierte Emulgatoren, insbesondere nichtionische alkoxylierte Emulgatoren und/oder anionische alkoxylierte Emulgatoren enthalten. Die alkoxylierten Emulgatoren verbessern sowohl die Handhabungseigenschaften der erfindungsgemäßen Copolymere, wie z. B. die Mischbarkeit und Verarbeitbarkeit von Copolymer und hydraulischem Bindemittel und die Verträglichkeit des Polymers mit dem hydraulischen Bindemittel, als auch die Handhabungseigenschaften und mechanischen Eigenschaften des mit dem Copolymer modifizierten hydraulischen Bindemittels.

Alkoxylierte Emulgatoren sind Emulgatoren, die im hydrophilen Teil Oligoalkylenoxid- oder Polyalkylenoxid-Einheiten aufweisen. Üblicherweise erhält man alkoxylierte Emulgatoren durch Umsetzung von lipophilen Verbindungen oder Verbindungen, die lipophile Gruppen aufweisen, mit Alkylenoxiden, insbesondere Ethylenoxid und/oder Propylenoxid. Solche alkoxylierten Emulgatoren können zusätzlich mit ionischen, insbesondere anionischen Gruppen modifiziert sein. Dementsprechend unterscheidet man zwischen anionischen alkoxylierten Emulgatoren, die wenigstens eine anionische oder eine anionogene Gruppe aufweisen und nichtionischen alkoxylierten Emulgatoren, die keine derartige Gruppe aufweisen.

Beispiele für lipophile Verbindungen oder Verbindungen, die lipophile Gruppen aufweisen, sind aliphatische, aromatische und/oder aromatisch-aliphatische Alkohole, Amide, Amine und Carbonsäuren sowie Derivate davon. Vorzugsweise sind die lipophilen Verbindungen oder Verbindungen, die lipophile Gruppen aufweisen, ausgewählt unter Fettsäuren, Fettalkoholen, Oxoalkoholen, den davon abgeleiteten Aminen, Amiden und Salzen, Phenolen, Alkylphenolen, Hydroxy- oder Aminonaphthalinen, Dicarbonsäuren und deren Estern oder Halbestern und wenigstens eine Hydroxy-Gruppe tragenden lipophilen oder lipophile Abschnitte aufweisenden Polyalkylenoxiden, wie beispielsweise Polypropylenoxid, Polybutylenoxid und statistische Copolymerisate oder Blockcopolymerisate aus Ethylenoxid, Propylenoxid und/ oder Butylenoxid.

Der Alkoxylierungsgrad solcher alkoxylierter Emulgatoren liegt in der Regel im Bereich von 2 bis 150, vorzugsweise 3 bis 100 und besonders bevorzugt 4 bis 50.

Beispiele für bevorzugte nichtionische aliphatische alkoxylierte Emulgatoren sind ethoxylierte und ethoxylierte/ propoxylierte, bevorzugt ethoxylierte $C_6$-$C_{32}$-Fettalkohole und -Amine, $C_6$-$C_{60}$-Oxoalkohole und -Amine, lineare primäre $C_6$-$C_{60}$-Ziegleralkohole, Fettsäurealkylolamide, Fettsäuren und Fettsäureamide, die einen Alkoxylierungsgrad von 3 bis 100, bevorzugt 4 bis 50, aufweisen sowie Polyalkylenoxidaddukte, wie Ethylenoxid-Propylenoxid-Blockcopolymerisate.

Bevorzugte nichtionische aliphatische alkoxylierte Emulgatoren sind ausgewählt unter ethoxylierten $C_6$-$C_{32}$-Fettalkoholen, bevorzugt $C_8$-$C_{20}$-Fettalkoholen, insbesondere $C_9$-$C_{16}$-Fettalkoholen, z. B. überwiegend wenig verzweigten Fettalkoholen, die durch Reduktion natürlich vorkommender Fettsäuren erhältlich sind, und ethoxylierten $C_6$-$C_{32}$-Oxoalkoholen, bevorzugt $C_8$-$C_{20}$-Oxoalkoholen und insbesondere $C_9$-$C_{16}$-Oxoalkoholen, die im allgemeinen im Vergleich zu den Fettalkoholen stärker verzweigt sind, mit einem mittleren Ethoxylierungsgrad von 2 bis 150, bevorzugt 4 bis 50, insbesondere 6 bis 30, beispielsweise 8 bis 15 oder 12 bis 25. Beispiele für bevorzugte nichtionische aliphatische alkoxylierte Emulgatoren sind ethoxylierter Laurylalkohol mit einem Ethoxylierungsgrad von 4 bis 50, insbesondere 8 bis 25, wie die Lutensolmarken LU-TENSOL® AT18 und AT25 der BASF Aktiengesellschaft. Besonders bevorzugte Emulgatoren sind u.a. Alkylalkoholethoxylate mit 5 bis 30 Ethoxyeinheiten oder Alkylalkoholpropoxylate mit 5 bis 30 Propyloxyeinheiten.

Beispiele für nichtionische aromatische oder aromatisch-aliphatische alkoxylierte Emulgatoren sind ethoxylierte und ethoxylierte/ propoxylierte, bevorzugt ethoxylierte $C_6$-$C_{32}$-Alkylphenole, insbesondere $C_6$-$C_{16}$-Alkylphenole mit einem mittleren Alkoxylierungsgrad im Bereich von 2 bis 150, bevorzugt 3 bis 100 und insbesondere 3 bis 50.

Die anionischen Gruppen anionischer alkoxylierter Emulgatoren sind üblicherweise ausgewählt unter Sulfatgruppen, Sulfonatgruppen, Carboxylatgruppen, Phosphonatgruppen und Phosphatgruppen. Geeignet als Gegenionen der anionischen Gruppen sind Kationen wie beispielsweise Natrium-, Kalium-, Calcium- oder Ammoniumionen sowie Gemische davon. Vorzugsweise ist das Gegenion verschieden von Ammoniumionen leicht flüchtiger Amine, wie Ammoniak, Methylamin oder Ethylamin. Bevorzugtes Gegenion ist das Natriumion. Bevorzugte anionische Gruppen sind die Sulfatgruppe und die Sulfonatgruppe.

Beispiele für anionische alkoxylierte Emulgatoren sind die Schwefelsäure-Halbester und Phosphorsäure-Monoester der obengenannten nichtionischen alkoxylierten Emulgatoren, sowie $C_8$-$C_{32}$-Alkenylpolyethoxysulfonate bzw. -sulfate, $C_8$-$C_{32}$-Alkylglycerylpolyethoxysulfonate, ethoxylierte Sulfobernsteinsäurehalb- und -diester, $C_8$-$C_{32}$-Alkenyl- oder Dialkylpolyethoxyphosphate, ethoxylierte ein- und mehrfach kernsulfonierte Mono- und Dialkylbiphenylether, ethoxylierte $\alpha$-Sulfofettsäureester, ethoxylierte Fettsäurealkanolaminsulfate, sulfonierte oder sulfatierte ethoxylierte Fettsäureester, Fettsäuresarkoside, -glycolate, -lactate, -tauride und -Isothionate, die einen Alkoxylierungsgrad im Bereich von 2 bis 150, vorzugsweise 2 bis 100 und besonders bevorzugt drei bis 50 aufweisen, und deren Salze, insbesondere die Alkalimetall-, z. B. die Natrium- oder Kaliumsalze, oder die Ammoniumsalze, z. B. die Salze mit organischen Aminen, wie Mono-, Di- oder Tri-$C_1$-$C_4$-Alkylaminen oder Mono-, Di- oder Triethanolaminen.

Bevorzugte anionische aliphatische alkoxylierte Emulgatoren sind ausgewählt unter den Schwefelsäure-Halbestern ethoxylierter $C_8$-$C_{20}$-Fettalkohole, insbesondere $C_9$-$C_{16}$-Fettalkohole, z. B. überwiegend wenig verzweigten Fettalkohole, die durch Reduktion natürlich vorkommender Fettsäuren erhältlich sind, und ethoxylierter $C_8$-$C_{32}$-Oxoalkohole, insbesondere $C_9$-$C_{16}$-Oxoalkohole, die im allgemeinen im Vergleich zu den Fettalkoholen stärker verzweigt sind, die einen mittleren Ethoxylierungsgrad von 2 bis 50, insbesondere 2 bis 30, beispielsweise 2 bis 15 oder 9 bis 30

aufweisen.

Bevorzugte anionische aromatische oder anionische aromatisch-aliphatische alkoxylierte Emulgatoren sind ausgewählt unter den Schwefelsäure-Halbestern ethoxylierter und ethoxylierter/propoxylierter, bevorzugt ethoxylierter $C_6$-$C_{32}$-Alkylphenole, insbesondere $C_6$-$C_{16}$-Alkylphenole und besonders bevorzugt Octylphenol und Nonylphenol, die einen mittleren Alkoxylierungsgrad im Bereich von 2 bis 50, insbesondere 2 bis 35, aufweisen.

Gegebenenfalls können die erfindungsgemäßen Zubereitungen auch nicht alkoxylierte Emulgatoren enthalten, jedoch sind in der Regel mindestens 20 Gew.-%, vorzugsweise mindestens 30 Gew.-% der eingesetzten Emulgatoren alkoxylierte Emulgatoren. In einer Ausführungsform sind die erfindungsgemäßen Zubereitungen im Wesentlichen frei von nicht alkoxylierten Emulgatoren. Andere bevorzugte Ausführungsformen betreffen solche Zubereitungen, die wenigstens einen nichtionischen alkoxylierten Emulgator und wenigstens einen anionischen Emulgator ausgewählt unter alkoxylierten und anionischen nicht alkoxylierten Emulgatoren enthalten.

Bevorzugt enthalten die erfindungsgemäßen Polymerdispersionen oder die aus ihnen durch Trocknen, d. h. durch Entfernen von mindestens 80 Gew.-%, vorzugsweise mindestens 85 Gew.-% oder mindestens 90 Gew.-%, der flüchtigen Bestandteile erhältlichen Polymerpulver oder -granulate 0,2 bis 10 Gew.-% und bevorzugt 0,5 bis 5 Gew.-%, bezogen auf den Polymeranteil, wenigstens eines Emulgators.

In einer bevorzugten Ausführungsform der vorliegenden Erfindung wird als alkoxylierter Emulgator wenigstens ein nichtionischer alkoxylierter Emulgator, vorzugsweise ein nichtionischer aliphatischer alkoxylierter Emulgator, eingesetzt.

Wenn die erfindungsgemäßen Copolymerisate ein Gemisch aus wenigstens einem anionischen Emulgator und wenigstens einem nichtionischen alkoxylierten Emulgator enthalten, entfallen in der Regel 15 bis 90 Gew.-%, vorzugsweise 25 bis 80 Gew.-% und bevorzugt 40 bis 70 Gew.-% der Gesamtmenge an enthaltenen Emulgatoren auf anionische Emulgatoren.

Die vorstehend genannten oberflächenaktiven Substanzen, insbesondere die Emulgatoren, können ganz oder teilweise bei der Herstellung der Copolymerisate eingesetzt werden, ganz oder teilweise nach der Herstellung der Copolymerisate zugesetzt werden oder ganz oder teilweise bei der Verwendung zur Herstellung der erfindungsgemäßen Baumaterialien zugesetzt werden. Bei der Herstellung der erfindungsgemäß einzusetzenden Copolymerisate durch radikalische Emulsions-Polymerisation in wässrigen Medien hat es sich als vorteilhaft erwiesen, mindestens 25 Gew.-%, vorzugsweise mindestens 35 Gew.-% und besonders bevorzugt mindestens 50 Gew.-% der Gesamtmenge der Emulgatoren bei der Herstellung der Copolymerisate einzusetzen.

In einigen Ausführungsformen wird die Gesamtmenge an Emulgator im Wesentlichen bei der Herstellung der Copolymerisate eingesetzt. In anderen bevorzugten Ausführungsformen werden 30 bis 65 Gew.-%, bevorzugt 35 bis 60 Gew.-% und besonders bevorzugt 40 bis 55 Gew.-% der Gesamtmenge der eingesetzten, insbesondere der ionischen Emulgatoren, im Verlauf der radikalischen Emulsionspolymerisation zugesetzt. Die Restmenge an Emulgator wird nach Abschluss der Polymerisation zugesetzt (Nachseifen). Für die Herstellung und das "Nachseifen" können die gleichen oder unterschiedliche Emulgatoren eingesetzt werden, wobei beim Einsatz mehrerer Emulgatoren das Mischungsverhältnis der Emulgatoren für die Herstellung der Copolymerisate und für das Nachseifen unterschiedlich sein kann. Insbesondere können beim Nachseifen anionische alkoxylierte Emulgatoren und/oder anionische nichtalkoxylierte Emulgatoren zugesetzt werden.

Um eine hinreichende Verbesserung der mechanischen Festigkeit der Baumaterialien auf Basis hydraulischer Bindemittel zu erreichen, empfiehlt es sich in der Regel, Copolymerisate mit Glasübergangstemperaturen oberhalb von -60 °C, bevorzugt oberhalb von -50 °C, einzusetzen. Daher weisen die Copolymerisate vorzugsweise eine Glasübergangstemperatur $T_g$ von > -45 °C, besonders bevorzugt > -40 °C und insbesondere > -35 °C auf.

Um eine hinreichende Verbesserung der Flexibilität, insbesondere der Tieftemperaturflexibilität der Baumaterialien zu erreichen, sollten die Copolymerisate in den Baumaterialien auf Basis hydraulischer Bindemittel verfilmen können. Daher weisen die erfindungsgemäß zu verwendenden Copolymerisate in der Regel eine Glasübergangstemperatur $T_g$ von < +40 °C, bevorzugt < +30 °C besonders bevorzugt < +20 °C, ganz besonders bevorzugt < +10 und insbesondere < 0 °C auf.

Geeignete Copolymerisate für die erfindungsgemäße Verwendung weisen daher Glasübergangstemperaturen Tg von mehr als -30 °C, insbesondere mehr als -25 °C, besonders bevorzugt mehr als -20 °C und ganz besonders bevorzugt von mehr als -15 °C auf.

Unter der Glasübergangstemperatur $T_g$ wird hier die gemäß ASTM D 3418-82 durch Differentialthermoanalyse (DSC) ermittelte "midpoint temperature" verstanden (vgl. Ullmann's Encyclopedia of Industrial Chemistry, 5th Edition, Volume A 21, VCH Weinheim 1992, S. 169 sowie Zosel, Farbe und Lack 82 (1976), S. 125-134, siehe auch DIN 53765).

Bei Polymerdispersionen, bei denen Copolymerisatbestandteile unterschiedlicher Glasübergangstemperatur enthalten sind, ist es in der Regel vorteilhaft, wenn zumindest der Hauptbestandteil eine Glasübergangstemperatur $T_g$ in einem der vorstehend angegebenen Bereiche aufweist. Solche Zubereitungen sind z. B. durch Mischung zweier oder mehrerer unterschiedlicher Copolymerisate oder durch Polymerisationsverfahren zugänglich, die z. B. zu Stufenpolymerisaten, Polymerteilchen mit Kern-Schale-Aufbau oder sonstigen Copolymerisatteilchen mit nicht statistischer Zusammensetzung führen.

Die Einstellung der Glasübergangstemperatur Tg auf einen gewünschten Wert kann sowohl durch Auswahl der entsprechenden Monomere als auch der Mengenverhältnisse der eingesetzten Monomere in dem Copolymerisat oder den Copolymerisaten erfolgen.

In diesem Zusammenhang erweist es sich als hilfreich, die Glasübergangstemperatur $T_g$ des Copolymeren P abzuschätzen. Nach Fox (T.G. Fox, Bull. Am. Phys. Soc. (Ser. II) 1, 123 [1956] und Ullmanns Enzyklopädie der technischen Chemie, Weinheim (1980), S. 17-18) gilt für die Glasübergangstemperatur von schwach vernetzten Mischpolymerisaten bei großen Molmassen in guter Näherung

$$\frac{1}{T_g} = \frac{X^1}{T_g{}^1} + \frac{X^2}{T_g{}^2} + \cdots\cdots \frac{X^n}{T_g{}^n}$$

wobei $X^1$, $X^2$, ..., $X^n$ die Massenbrüche der Monomeren 1, 2, ..., n und $T_g{}^1$, $T_g{}^2$, ..., $T_g{}^n$ die Glasübergangstemperaturen der jeweils nur aus einem der Monomeren 1, 2, ..., n aufgebauten Polymeren in Grad Kelvin bedeuten. Letztere sind z. B. aus Ullmann's Encyclopedia of Industrial Chemistry, VCH, Weinheim, Vol. A 21 (1992) S. 169 oder aus J. Brandrup, E.H. Immergut, Polymer Handbook 3rd ed, J. Wiley, New York, 1989 bekannt.

Verfahren zur Einstellung der wie vorstehend beschriebenen Polymerteilchengröße sind beispielsweise aus der EP-A-126 699, der EP-A-567 881, der EP-A-567 819, der DE-A-31 47 008 und der DE-A-42 13 967 bekannt.

Vorzugsweise weisen die erfindungsgemäßen Polymerdispersionen einen pH-Wert im Bereich von 6,7 bis 8,0, bevorzugt 6,8 bis 7,5 und besonders bevorzugt 6,9 bis 7,2, wie beispielsweise 7,0 oder 7,1, auf. Zum Einstellen des pH-Wertes der Polymerdispersionen werden vorzugsweise nichtflüchtige Basen eingesetzt. Geeignete nichtflüchtige Basen sind beispielsweise Natronlauge, Kalilauge und gelöschter Kalk, der beispielsweise als Feststoff oder als wässrige Lösung (Calciumhydroxidlösung) eingesetzt werden kann. Bevorzugt wird gelöschter Kalk als wässrige Suspension eingesetzt. Das Einhalten des speziellen, wie vorstehend beschrieben pH-Bereichs und die Verwendung der vorgenannten Basen beeinflusst das Anwendungsprofil der erfindungsgemäß zu verwendenden Dispersionen positiv. Insbesondere wird die Verträglichkeit der Polymerdispersionen mit den hydraulischen Bindemitteln günstig beeinflusst.

Die erfindungsgemäßen Polymerdispersionen können direkt, gegebenenfalls nach Einstellen des Feststoffgehaltes und/oder nach Zugabe üblicher Hilfsstoffe (wie nachstehend beschrieben) den Baumaterialien auf Basis von hydraulischen Bindemitteln zugesetzt werden. Wenn wässrige Dispersionen erfindungsgemäß verwendet werden, liegt der Feststoffgehalt der Dispersion, d. h. der Anteil der nichtflüchtigen Bestandteile, in der Regel im Bereich von 20 bis 80 Gew.-%. Vorzugsweise werden die Dispersionen, bezogen auf den Feststoffgehalt, als 30 bis 70 gew.-%ige, insbesondere 35 bis 60 gew.-%ige und besonders bevorzugt 40 bis 55 gew.-%ige wässrige Dispersion eingesetzt.

Die erfindungsgemäßen Dispersionen sollen vorzugsweise frei von Ammoniak sein.

Die Viskosität der wässrigen Dispersionen liegt in der Regel im Bereich von 10 bis 2500 mPas, vorzugsweise 20 bis 500 mPas, gemessen als 55 gew.-%ige Dispersion in einem Rotationsviskosimeter gemäß DIN 53019 bei 23 °C und einer Schergeschwindigkeit von 250 $s^{-1}$. Die wässrigen Polymerdispersion können organische Lösungsmittel, vorzugsweise mit Wasser mischbare organische Lösungsmittel, wie z. B. Alkohole, Diole und Polyole enthalten. Vorzugsweise liegt der Gehalt an organischen Lösungsmitteln unter 10 Gew.-%, bezogen auf das Gesamtgewicht der Polymerdispersion, besonders bevorzugt sind die Polymerdispersionen im Wesentlichen frei von organischen Lösungsmitteln.

Die erfindungsgemäßen Polymerdispersionen können auch in halbfester Form, z. B. als pastöse Masse, oder in fester Form, z. B. als Pulver oder Granulate, eingesetzt werden. Polymerpulver oder -granulate sind aus den Polymerdispersionen durch Trocknen, vorzugsweise durch Sprühtrocknen, erhältlich.

Gegenstand der vorliegenden Erfindung ist daher auch die Verwendung von Polymerpulvern oder Granulaten, die beispielsweise durch Entfernen von mindestens 80 Gew.-%, vorzugsweise mindestens 90 Gew.-%, der flüchtigen Bestandteile aus wie vorstehend beschriebenen Polymerdispersionen erhältlich sind, als Zusatz zu Baumaterialien auf Basis von hydraulischen Bindemitteln.

Die Polymerdispersionen, Polymerpulver oder -granulate können übliche Hilfsmittel enthalten. Die Hilfsmittel werden in der Regel in Mengen von insgesamt 0,1 bis 30 Gew.-%, bezogen auf das Copolymerisat, eingesetzt. Übliche Hilfsmittel sind beispielsweise Netzmittel, Fungizide, Biozide, Entschäumer, wie z. B. die kommerziell erhältlichen Entschäumer der Fa. BASF (Ludwigshafen), der Fa. Münzig (Heilbronn) und der Fa. Wacker (München), Verdikkungsmittel, Gefrierschutzmittel, Verlaufsförderer, Weichmacher und Filmbildehilfsmittel. Geeignete Filmbildehilfsmittel sind beispielsweise Ethylenglycol, Propylenglycol, Butylenglycol, Hexylenglycol, Diethylenglycol, Dipropylenglycol, Dibutylenglycol, deren Halbether mit $C_1$-$C_4$-Alkanolen, z. B. Diethylenglycolmonoethylether,- monobutylether, Propylenglycolmonophenylether, Propylenglycolmonopropylether, -monobutylether, Dipropylenglycolmonopropylether, -monobutylether, deren Ether-Acetate, wie Diethylenglycolmonoethyletheracetat und -monobutyletheracetat, Propylenglycolmonopropyletheracetat und -monobutyletheracetat, Dipropylenglycol-n-butyletheracetat, ferner Alkylester aliphatischer Mono- und Dicarbonsäuren, z. B. Texanol® der Eastman Kodak oder deren technische Gemische davon, z. B. Lusolvan FBH der

BASF AG (Di-n-butylestergemische der Bernstein-, Glutar- und Adipinsäure). Als Weichmacher kommen alle üblichen, für Dispersionen geeigneten Weichmacher, beispielsweise (Oligo)propylenglycolalkylphenylether, wie sie z. B. als Plastilit® 3060 der BASF AG im Handel erhältlich sind, in Frage.

Die erfindungsgemäßen Polymerdispersionen, Polymerpulver oder -granulate können zusätzlich einen Verflüssiger für hydraulische Bindemittel enthalten. In der Regel handelt es sich bei Verflüssigern für hydraulische Bindemittel um Additive, die zur Veränderung der Eigenschaften von Baumaterialien auf Basis hydraulischer Bindemittel, insbesondere der Verarbeitungskonsistenz und/oder Abbindeeigenschaften führen. In der Regel handelt es sich bei solchen Verflüssigern von Baumaterialien auf Basis hydraulischer Bindemittel um wasserlösliche makromolekulare Substanzen.

Die gute Verarbeitbarkeit der mit den erfindungsgemäß zu verwendenden Dispersionen modifizierten Baumaterialien auf Basis hydraulischer Bindemittel kann in vielen Fällen durch die Anwesenheit eines Verflüssigers noch weiter verbessert werden.

Vorzugsweise geeignet sind Verflüssiger auf Basis von Naphthalinsulfonsäure-Formaldehyd-Kondensaten, Melamin-Formaldehyd-Polykondensaten und/oder Ligninsulfonaten, wie z. B. in der EP-A-402 319 beschrieben, sowie auf Basis von Homo- und Copolymeren von Carbonsäuren und Dicarbonsäuren mit Styrol, wie z. B. in der EP-A-306 449 und US-A-3 952 805, oder Isobuten oder Diisobuten, wie in der DE-A-37 16 974, EP-A-338 293, DE-A-39 25 306, US-A-4 586 960, US-A-4 042 407 und US-A-4 906 298, beschrieben.

Ebenfalls geeignet sind Verflüssiger auf Basis von Copolymerisaten aus ungesättigten Carbonsäuren und Hydroxyalkylestern ungesättigter Carbonsäuren, wie z. B. in der EP-A 97 613 beschrieben, auf Basis einpolymerisierter Carbonsäuremonomere und Polyalkylenoxidester der Acrylsäure und der Methacrylsäure, wie z. B. in der DE-A-44 20 444 beschrieben, auf Basis von ethylenisch ungesättigten Polyoxyalkylenethern, mehrfach ungesättigten Alkenylethern und Maleinsäureanhydrid, wie beispielsweise in der EP-A 619 277 beschrieben, oder auf Basis von Copolymeren von Maleinsäurederivaten und Vinylmonomeren, wie beispielsweise in der DE-A-43 04 109 und der EP-A-610 699 beschrieben.

Auf die vorgenannten Publikationen wird hiermit in vollem Umfang Bezug genommen.

Derartige Verflüssiger sind beispielsweise von des Firmen ADDI-MENT (Heidelberg), SKW (Trostberg), BASF (Ludwigshafen), insbesondere die Sokalan-Marken, und DYCKERHOFF (Wiesbaden) kommerziell erhältlich.

Die erfindungsgemäßen Polymerdispersionen, Polymerpulver oder -granulate werden den Baumaterialien auf Basis hydraulischer Bindemittel vorzugsweise in einer Menge von 20 bis 200 Gew.-%, besonders bevorzugt 20 bis 150 Gew.-% und insbesondere 20 bis 100 Gew.-%, bezogen auf das Trockengewicht des hydraulischen Bindemittels, zugesetzt. In der Regel ist schon ein Zusatz von 20 bis 80 Gew.-% Polymer, bezogen auf das hydraulische Bindemittel, ausreichend, um die gewünschte Verbesserung der Eigenschaften von hydraulischen Bindemitteln und Baumaterialien auf Basis hydraulischer Bindemittel zu erreichen. Dabei wird der Zusatz von Polymerdispersion, Polymerpulver oder -granulat als Feststoff gerechnet.

Übliche Hilfsmittel für Baumaterialien auf Basis hydraulischer Bindemittel sind insbesondere vorstehend beschriebene Hilfsmittel und Verflüssiger. Geeignete weitere Hilfsmittel für den Einsatz in Baumaterialien sind dem Fachmann bekannt und beispielsweise in H. Reul, Handbuch der Bauchemie, Verlag für chemische Industrie H. Ziolkowsky KG, Augsburg (1991), beschrieben.

Als übliche Zuschläge für Baumaterialien auf Basis hydraulischer Bindemittel kommen beispielsweise Kies, Grobsand, Feinsand, Quarzsand unterschiedlicher Korngrößen, z. B. Korngrößen zwischen 0,08 und 0,8 mm, Quarzmehl, z. B. mit Korngrößen $\leq$ 0,09 mm, Basalt, Kalkstein, Kreide, Marmor, Traß, Silikatstaub, gefällte Kieselsäure, Steinkohlenflugasche und Bariumsulfat in Betracht. Weitere geeignete mineralische oder nichtmineralische Zuschläge sind dem Fachmann bekannt und beispielsweise in Sachstandsbericht Dt. Bauchemie: Modifizierte Mineralische Mörtelsysteme und Umwelt (1.Ausgabe, Juli 1998) beschrieben.

Ebenfalls Gegenstand der vorliegenden Erfindung sind Baumaterialien auf Basis hydraulischer Bindemittel, die, bezogen auf das Trockengewicht des mineralischen Anteils, 1 bis 20 Gew.-%, vorzugsweise 1 bis 10 Gew.-% und besonders bevorzugt 3 bis 10 Gew.-% einer wie vorstehend beschriebenen Polymerdispersion, eines daraus erhältlichen Polymerpulvers oder -granulats, gerechnet als Feststoff, enthalten.

Typische Baumaterialien auf Basis hydraulischer Bindemittel, die durch die erfindungsgemäße Verwendung in ihren Eigenschaften verbessert werden können, sind Zement, Flüssigzement, Beton, Mörtel, Putz, Estrichmassen, Bindemittelzubereitungen, insbesondere solche auf Basis von Zement, Straßenbeläge und Fliesenkleber. Bevorzugte Baumaterialien sind insbesondere mineralische Dichtungsschlämme.

Die Baumaterialien können, je nach Anwendungszweck und Verarbeitungsstadium, in fester Form (z. B. vor der Zugabe des Anmachwassers bzw. der Polymerdispersion oder nach dem Aushärten), in flüssiger Form sowie in zähflüssiger oder pastöser Form vorliegen.

Selbstverständlich können die aus den Polymerdispersionen gewonnenen Polymerpulver auch mit dem mineralischen Bindemittel vor Verwendung im Baustoff vermischt werden. Solche Zubereitungen enthalten das hydraulische Bindemittel, vorzugsweise Zement, und das Polymer in der Regel als Hauptbestandteile. Ferner können diese Zubereitungen übliche mineralische oder nichtmineralische Zuschläge und übliche Hilfsmittel, z. B. wie vorstehend beschrieben,

enthalten.

Außerdem betrifft die vorliegende Erfindung ein Verfahren zur Verbesserung der mechanischen Festigkeit, Elastizität und Verarbeitbarkeit von Baumaterialien auf Basis hydraulischer Bindemittel, bei dem man hydraulisches Bindemittel und Polymerdispersion, Polymerpulver oder -granulat und gegebenenfalls Wasser und/oder Zuschläge miteinander vermischt. Geeignete Mischtechniken und Mischvorrichtungen sind dem Fachmann bekannt und z. B. in Ullmanns Enzyklopädie der technischen Chemie, 3. Auflage, 1951, Band 1, S. 693 bis 727 beschrieben.

Die erfindungsgemäßen Polymerdispersionen, Polymerpulver oder -granulate führen zu polymermodifizierten Baumaterialien, die sich im Vergleich zu den polymermodifizierten Baumaterialien auf Basis hydraulischer Bindemittel des Standes der Technik u.a. dadurch auszeichnen, dass sie bei dem Vermischen von Polymer und hydraulischen Bindemittel und auch danach keinen oder nur einen sehr geringen unangenehmen Geruch entwickeln. Die erfindungsgemäßen Polymerdispersionen, Polymerpulver oder -granulate führen darüber hinaus bei einer Vielzahl von Baumaterialien auf Basis mineralischer Bindemittel zu verbesserten Eigenschaften in verfestigtem oder abgebundenem Zustand, insbesondere zu einer erhöhten mechanischen Festigkeit, z. B. einer erhöhten Flexibilität, erhöhten Reißfestigkeit und verbesserten Reißdehnung. Weiterhin wird die Wasseraufnahme der Baumaterialien in verfestigtem oder abgebundenem Zustand deutlich verringert, so daß diese diese sehr wasserdicht werden. In der Regel wird auch die Verarbeitbarkeit der Baumaterialien auf Basis hydraulischer Bindemittel vor dem Verfestigen verbessert, z. B. durch eine günstige sogenannte "offene Zeit" und durch ein geringes Kleben oder Haften an den Werkzeugen beim Anrühren oder Aufschlämmen der hydraulischen Bindemittel zu flüssigen, halbfesten oder pastösen Baumaterialien. Besonders vorteilhaft kommen die Eigenschaften der erfindungsgemäßen Dispersionen, Polymerpulver oder -granulate bei Baumaterialien auf Basis von Zement zum Tragen.

Die erfindungsgemäßen Polymerdispersionen eignen sich selbstverständlich auch für nicht-zementäre Anwendungen, insbesondere für füllstoffhaltige Beschichtungssysteme, speziell für flexible Beschichtungssysteme wie flexible Dachbeschichtungsmassen und Dichtungsmassen sowie für Klebstoffe, speziell füllstoffhaltige Bauklebstoffe wie Fliesenkleber.

Typische Rezepturen für flexible Dachbeschichtungsmassen umfassen neben Wasser auch erfindungsgemäße Polymerdispersionen. Pigmente wie Titandioxid oder Bariumsulfat und Füllstoffe wie Calziumcarbonat, Kreide, Talkum, Tone sowie übliche Hilfsmittel, z. B. Biozide, Benetzungsmittel, Filmbildehilfsmittel, z. B. Kohlenwasserstoffe wie Benzin, Weichmacher, Lösungs- und Frostschutzmittel, z. B. Glycerin oder Glykol, Verdicker (z. B. Assoziativverdicker) und Entschäumer. Der Anteil an Pigmenten liegt in der Regel im Bereich von 1 bis 5 Gewichtsteilen je 1 Gew.-Teil Copolymerisat. Der Anteil an Hilfsmitteln beträgt in der Regel 0,5 bis 25 Gew.-Teile je 100 Gew.-Teile Copolymerisat.

Typische Rezepturen für Fliesenkleber umfassen neben den erfindungsgemäßen Copolymerisaten und Wasser auch Füllstoffe, z. B. die oben genannten Füllstoffe und/oder Silikate, oder Kieselsäuren; weiterhin Hilfsstoffe, z. B. die oben genannten Hilfsstoffe. Der Anteil an Füllstoffen beträgt in der Regel 5 bis 10 Gew.-Teile auf 1 Gewichtsteil Copolymerisat. Der Anteil an Hilfsstoffen liegt in der Regel bei 1 bis 20 Gew.-Teilen je 100 Gew.-Teilen Copolymerisat. Typische Formulierungen für Fliesenkleber sind in der EP-A 35 332, Beispiele 2 und 4 angegeben, auf die hiermit Bezug genommen wird.

Darüber hinaus lassen sich die erfindungsgemäßen Polymerdispersionen bzw. die daraus erhaltenen Polymerpulver bzw. Polymergranulate auch als Zusatz in Bitumen für den Straßenbau, den Wasserbau oder für Dachbeschichtungen verwenden. Die Polymerdispersionen können sowohl in Heißbitumen als auch in Bitumenemulsionen eingesetzt werden, wobei letztere entweder anionisch oder kationisch sind. Bitumenemulsionen bestehen üblicherweise aus ca. 10 bis 15 % Polymerdispersionen, 0,1 bis 2 % Verdickern sowie aus mit Hilfe von Emulgatoren in Wasser emulgiertem Bitumen. Sie können ferner mit Zement versetzt werden.

Die erfindungsgemäßen Polymerdispersionen eignen sich ebenso wie die daraus erhältlichen Polymerpulver und Polymergranulate als Zusatz in Baumaterialien auf Basis von hydraulischen Bindemitteln, welche als Dichtungsschlämme eingesetzt werden.

## Beispiele

Die in den erfindungsgemäßen Beispielen eingesetzten erfindungsgemäßen Polymerdispersionen und die Polymerdispersionen der Vergleichsbeispiele wurden durch radikalische Polymerisation im wässrigen Medium erhalten.

### I. Herstellung der Polymerdispersionen (Beispiele $E_1$-$E_7$ und Vergleichsbeispiele $V_1$ - $V_3$)

Die nichtflüchtigen Anteile (Feststoffgehalt) wurden in einem Umluft-Trockenschrank bestimmt aus dem Gewichtsverlust einer 1 g-Probe, die zwei Stunden bei 120°C getrocknet wurde. Zur Messung des pH-Wertes wurde eine handelsübliche Einstabmeßkette (Fa. Schott Typ Handylab 1) verwendet. Die Glasübergangstemperatur Tg wurde mit Hilfe eines Differentialkalorimeters DSC 820 der Fa. Mettler Toledo bei einer Aufheizgeschwindigkeit von 5°C/min. bestimmt.

Verwendete Abkürzungen:

| | |
|---|---|
| EDTA: | Ethylendiamintetraacetat |
| EO: | Ethylenoxideinheiten |
| HEA: | Hydroxyethylacrylat |
| HEMA: | Hydroxyethylmethacrylat |
| t-DMK: | tert.-Dodecylmercaptan |
| PO: | Propylenoxideinheiten |
| EA: | Ethylacrylat |
| EEEA: | Ethoxyethoxyethylacrylat |
| AS: | Acrylsäure |
| MAS: | Methacrylsäure |
| NAPS: | Natriumperoxodisulfat |
| Upm: | Umdrehungen pro Minute |

Beispiel E-1:

In einem 40 1 Reaktor mit Ankerrührer (80 Upm) wurden 3200 g vollentsalztes Wasser, 3 g EDTA (40 Gew.-%) und 492 g Polystyrolsaat (33 Gew.-%) der Teilchengröße 30 nm vorgelegt. Bei einer Innentemperatur von 90°C wurden 8 g Natriumperoxodisulfat gelöst in 300 g vollentsalztem Wasser zugegeben. Nach 10 Minuten wurden Zulauf 1 und Zulauf 2 gestartet. Zulauf 1 wurde während 4 Std. und Zulauf 2 während 4,5 Std. zugegeben. Anschließend wurde 1 Std. nachpolymerisiert. Danach wurden die Zuläufe 3 und 4 während 2 Std. räumlich getrennt zugefahren. Der Entspannungsvorgang des Kessels wurde 4 Std. lang über eine Schaumsonde bei 60°C Außentemperatur getaktet. Die fertige Dispersion wurde durch Strippen mit Wasserdampf von Monomeren gereinigt.

| | | |
|---|---|---|
| Vorlage: | VE-Wasser | 3200 g |
| | EDTA (40 %) | 3 g |
| | Saat (33 %) | 492 g |
| Zugabe 1: | VE-Wasser | 300 g |
| | Na-peroxodisulfat | 8 g |
| Zulauf 1: | VE-Wasser | 3000 g |
| | Fettalkoholethoxylat mit 8 EO-Einheiten (20 %) | 500 g |
| | Natriumlaurylsulfat (15 %) | 667 g |
| | Natronlauge (25 %) | 150 g |
| | Natriumpyrophosphat (3 %) | 2083 g |
| | t.-Dodecylmercaptan | 225 g |
| | HEA | 750 g |
| | Styrol | 5500 g |
| | Butadien | 6250 g |
| Zulauf 2: | VE-Wasser | 2200 g |
| | Natriumperoxodisulfat | 100 g |
| Zulauf 3: | VE-Wasser | 624 g |
| | tert.-Butylhydroperoxid (70 %) | 36 g |

(fortgesetzt)

| | | |
|---|---|---|
| Zulauf 4: | VE-Wasser | 577 g |
| | Natriumdisulfit (40 %) | 66 g |
| | Aceton | 18 g |

Die so hergestellte Polymer-Dispersion enthält 50,8 % nichtflüchtige Anteile und hat einen pH-Wert von 5,9. Das enthaltene Copolymerisat besitzt eine Glasübergangstemperatur von -19°C.

Beispiel E-2:

Wie E-1, jedoch wurde die Saatmenge in der Vorlage auf 114 g verringert, Zulauf 1 wurde mit 625 g HEA, 6875 g Styrol, 5000 g Butadien und 63 g t-DMK beschickt. In Zulauf 2 wurden 143 g Natriumperoxodisulfat eingesetzt.
Die so hergestellte Polymerdispersion enthält 50,5 % nichtflüchtige Anteile und hat einen pH-Wert von 5,8. Das enthaltene Copolymerisat besitzt eine Glasübergangstemperatur von -2,5°C.

Beispiel E-3:

Wie E-1, jedoch wurden als Co-Monomere 688 g HEA und 63 g AS eingesetzt. Im Zulauf 2 wurden 150 g Natriumperoxodisulfat eingesetzt. Die so hergestellte Polymerdispersion enthält 50,8 % nichtflüchtige Anteile und hat einen pH-Wert von 5,4. Das enthaltene Copolymerisat besitzt eine Glasübergangstemperatur von -18°C.

Beispiel E-4:

Wie E-1, jedoch wurden 63 g HEA vorgelegt und 688 g HEA in Zulauf 1 gegeben. Die Reglermenge wurde auf 150 g t-DMK verringert.
Die so hergestellte Polymerdispersion enthält 51,9 % nichtflüchtige Anteile und hat einen pH-Wert von 5,9. Das enthaltene Copolymerisat besitzt eine Glasübergangstemperatur von -18°C.

Beispiel E-5:

Wie E-1 jedoch wurde auf Fettalkoholethoxylat mit 8 EO-Einheiten verzichtet und die Menge an Natriumlaurylsulfat auf 417 g verringert. Zusätzlich wurden 125 g Allylalkohol verethert mit 10 EO-Einheiten in den Zulauf gegeben. Die Initiatormenge im Zulauf 2 wurde auf 150 g Natriumperoxodisulfat erhöht.
Die so hergestellte Polymerdispersion enthält 50,2 % nichtflüchtige Anteile und hat einen pH-Wert von 5,5. Das enthaltene Copolymerisat besitzt eine Glasübergangstemperatur von -17°C.

Beispiel E-6:

Wie E-1 jedoch wurde auf Fettalkoholethoxylat mit 8 EO-Einheiten verzichtet und die Menge an Natriumlaurylsulfat auf 417 g verringert. Zusätzlich wurden 125 g Allylalkohol verethert mit 20 EO x 20 PO-Einheiten in den Zulauf gegeben. Die Initiatormenge im Zulauf 2 wurde auf 150 g Natriumperoxodisulfat erhöht.
Die so hergestellte Polymerdispersion enthält 51,3 % nichtflüchtige Anteile und hat einen pH-Wert von 5,6. Das enthaltene Copolymerisat besitzt eine Glasübergangstemperatur von -18°C.

Beispiel E-7:

Wie E-1 jedoch wurde auf Fettalkoholethoxylat mit 8 EO-Einheiten verzichtet und die Menge an Natriumlaurylsulfat auf 417 g verringert. Zusätzlich wurden 125 g Allylalkohol verethert mit 20 EO x 10 PO-Einheiten in den Zulauf gegeben. Die Initiatormenge im Zulauf 2 wurde auf 150 g Natriumperoxodisulfat erhöht.
Die so hergestellte Polymerdispersion enthält 52,2 % nichtflüchtige Anteile und hat einen pH-Wert von 5,4. Das enthaltene Copolymerisat besitzt eine Glasübergangstemperatur von -19°C.

Beispiel V-1:

Wie E-1, jedoch wurden nur 75 g des Initiators Natriumperoxodisulfat im Zulauf 2 eingesetzt.
Die so hergestellte Polymerdispersion enthält 51,4 % nichtflüchtige Anteile und hat einen pH-Wert von 6,1.

Das enthaltene Copolymerisat besitzt eine Glasübergangstemperatur von -17°C.

Beispiel V-2:

Wie E-1, jedoch wurde die Saatmenge auf 114 g verringert und Zulauf 1 mit 240 g HEA, 192 g MAS und 7050 g Styrol beschickt.

Beispiel V-3:

Es wurde als Vergleichsbeispiel ein handelsübliches Acrylat bestehend aus: 2 % Acrylamid, 30 % Styrol und 68 % Butylacrylat herangezogen.

In der nachfolgenden Tabelle A sind für die erfindungsgemäßen Beispiele E1 - E7 sowie für die Vergleichsbeispiele V1 - V3 die Anteile der jeweils verwendeten Monomere in Gew.-% sowie zusätzlich die Menge des eingesetzten Initiators (NAPS-Natriumperoxodisulfat) in mol-%, bezogen jeweils auf die Gesamtmenge der Monomere a) bis f) aufgeführt.

Tabelle A

| Dispersion | Monomere [Gew.-%] |
|---|---|
| Beispiel E1 | 6 % HEA, 44 % Styrol, 50 % Butadien, 0,26 mol.-% NAPS |
| Beispiel E2 | 5 % HEA, 55 % Styrol, 40 % Butadien, 0,38 mol.-% NAPS |
| Beispiel E3 | 5,5 % HEA, 0,5 % Acrylsäure, 44 % Styrol, 50 % Butadien, 0,38 mol.-% NAPS |
| Beispiel E4 | 0,5 % HEA in der Vorlage, 5,5 % HEA, 44 % Styrol, 50 % Butadien, 0,26 mol.-% NAPS |
| Beispiel E5 | 6 % HEA, 44 % Styrol, 50 % Butadien, 1 % einpolymerisierbarer Emulgator: Allylalkohol verethert mit 10 EO-Einheiten, 0,38 mol.-% NAPS |
| Beispiel E6 | 6 % HEA, 44 % Styrol, 50 % Butadien, 1 % einpolymerisierbarer Emulgator: Allylalkohol verethert mit 20 EO x 20 PO-Einheiten, 0,38 mol.-% NAPS |
| Beispiel E7 | 6 % HEA, 44 % Styrol, 50 % Butadien, 1 % einpolymerisierbarer Emulgator: Allylalkohol verethert mit 20 EO x 10 PO-Einheiten, 0,38 mol.-% NAPS |
| Vergleichs-beispiel V1 | 6 % HEA (3,69 mol.-%), 44 % Styrol (30,2 mol.-%), 50 % Butadien (66,1 mol.-%), 0,66 % NAPS (0,2 mol.-%) |
| Vergleichs-beispiel V2 | 2 % HEA (1,22 mol.-%), 1,6 % MAS (1,32 mol.-%), 50 % Butadien (65,78 mol.-%), 46,4 % Styrol (31,69 mol.-%), 0,86 % NAPS (0,26 mol.-%) |
| Vergleichs-beispiel V3 | Acrylat |

II. Herstellung von Baumaterialien auf Basis der erhaltenen Polymerdispersionen und von Zement

Die aus den Beispielen E1 - E7 sowie aus den Vergleichsbeispielen V1 - V3 erhaltenen Polymerdispersionen wurden mit üblichen Zuschlagsstoffen sowie Zement als hydraulisches Bindemittel vermischt.

Zusammensetzung der Baumaterialien

Quarzmehl 0 - 0,09 mm 20,5 Teile, Quarzsand 0,08 - 0,2 mm 22,5 Teile, Quarzsand 0,2 - 0,5 mm 30 Teile, Zement CEM I 42,5 R 25 Teile, Lumiten E-P3108 2 Teile, Agitan® 281 0,3 Teile, Polymerdispersion 30 Teile (eingestellt auf 50 % Feststoffgehalt)
Agitan® 281: Entschäumer der Firma Münzig CEM I 42,5 R: Portlandzement
Lumiten E: Entschäumer der Firma BASF Aktiengesellschaft

III Ergebnisse von Versuchen zur Verarbeitbarkeit, Wasseraufnahme und Mechanik der aus II erhaltenen Baumaterialien

Bestimmung der Wasseraufnahme, der Reißkraft und der Reißdehnung:

Bestimmung der Wasseraufnahme:

Durch Trocknen für 7 Tage bei 50° C in einem Umlufttrockenschrank wurden von jeder Polymerdispersion

Polymerfilme mit einer Trockenschichtdicke von ca. 750 µm hergestellt. Aus den Filmen wurden jeweils 2 cm lange und 1 cm breite Stücke herausgeschnitten und 24 h lang bei Raumtemperatur in Wasser gelagert. Anschließend wurden die Stücke oberflächlich abgetrocknet und gewogen. Die Wasseraufnahme berechnet sich aus dem Quotienten der Filmgewichte nach und vor der Wasserlagerung.

Bestimmung der Reißkraft und der Reißdehnung:

Zur Überprüfung der Reißkraft und der Reißdehnung der erhaltenen zementösen Massen wurden aus diesen Zementfilme mit einer Nassschichtdicke von 2 mm hergestellt. Die Filme wurden 28 Tage bei Normklima (23 °C; 50 % relative Luftfeuchte) gehärtet. Anschließend wurden in Anlehnung an die DIN 53455 die Reißkraft und die Reißdehnung der Filme mittels eines automatischen Materialprüfgeräts mit einer Abzugsgeschwindigkeit von 100 mm/min gemessen.

Tabelle B

| | | | Wasseraufnahme | | | Mechanik | |
|---|---|---|---|---|---|---|---|
| Dispersion Beispiele | Wasser | Verarbeitung | 24 h | 48 h | 96 h | Reißkraft | Reißdehnung |
| E-1 | 6 | gut | 4,7 | 10,5 | 12,3 | 0,88 | 71 |
| E-2 | 5 | gut | 3,5 | 7,6 | 8,7 | 1,57 | 14 |
| E-3 | 6 | gut | 4,7 | 8,5 | 9,6 | 0,87 | 21 |
| E-4 | 6 | gut | 2,6 | 7,3 | 7,8 | 1,21 | 16 |
| E-5 | 6 | gut | 5,2 | 8,9 | 10,1 | 0,75 | 16 |
| E-6 | 6 | gut | 4,9 | 9,4 | 11 | 0,7 | 22 |
| E-7 | 6 | gut | 5 | 8 | 9,6 | 0,71 | 26 |
| Vergleichs-beispiele | | | | | | | |
| V1 | 6 | schlecht * | * | * | * | * | * |
| V2 | 10 | schlecht * | * | * | * | * | * |
| V3 | 10 | gut | 6 | 11 | 14 | 1,5 | 40 |
| * nicht verarbeitbar, es resultierte ein spröder rissiger Film, daher keine mechanischen Eigenschaften bestimmbar und auf die Bestimmung der Wasseraufnahme wurde ebenfalls verzichtet. | | | | | | | |

Aus den Ergebnissen der Tabelle B geht hervor, daß sich die erfindungsgemäßen Beispiele E1 - E7 insbesondere durch eine gute Verarbeitbarkeit bei gleichzeitig hoher Wasserdichtigkeit (geringe Wasseraufnahme) auszeichnen.

## Patentansprüche

1. Polymerdispersionen, enthaltend wenigstens ein Copolymerisat, das als Monomere

    a) 25 bis 70 Gew.-% wenigstens eines konjugierten aliphatischen Diens,
    b) 25 bis 70 Gew.-% wenigstens eines vinylaromatischen Monomeren,
    c) 0,1 bis 10 Gew.-% wenigstens eines Alkylpolyethylenglykol(meth)acrylats der Formel (I)

    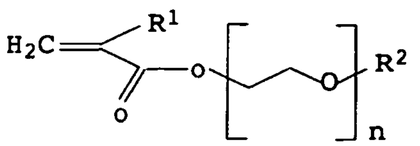

    (I),

    wobei $R^1$ für ein Wasserstoffatom oder eine Methylgruppe, $R^2$ für eine $C_1$-$C_4$-Alkylgruppe und n für eine ganze Zahl von 1 bis 100 steht oder
    c') 2 bis 15 Gew.-% eines Gemisches aus dem Monoester eines $C_2$-$C_{10}$-Alkandiols mit Acrylsäure oder Methacrylsäure und dem Alkylpolyethylenglykol(meth)acrylat c),
    d) 0 bis 1,0 Gew.-% ethylenisch ungesättigter Monomere, die wenigstens eine Säuregruppe aufweisen, oder deren Salze,

e) 0 bis 5,0 Gew.-% ethylenisch ungesättigter Nitrile und
f) 0 bis 1,0 Gew.-% Amide α,β-ethylenisch ungesättigter Mono- und Dicarbonsäuren

einpolymerisiert enthält.

**2.** Polymerdispersionen nach Anspruch 1, wobei die Polymerdispersionen zusätzlich 0 bis 10 Gew.-%, bezogen auf 100 Gew.-% des Copolymerisatanteils, wenigstens eines einpolymerisierbaren Emulgators auf der Basis von Allylalkoholalkoxylaten enthält.

**3.** Polymerdispersionen nach Anspruch 2, wobei als einpolymerisierbarer Emulgator ein Allylalkoholethoxylat mit 5 bis 30 Ethoxyeinheiten oder ein Allylalkoholpropoxylat mit 5 bis 30 Propyloxyeinheiten verwendet wird.

**4.** Polymerdispersionen nach den Ansprüchen 1 bis 3, wobei die Polymerisation zu deren Herstellung ausgelöst wird durch einen Initiator, der in einer Menge von mehr als 0,2 mol.-%, bezogen auf die Gesamtmenge der eingesetzten Monomere a) bis f), vorliegt.

**5.** Polymerdispersionen nach den Ansprüchen 1 bis 4, wobei als konjugierte Diene a) Butadien oder Isopren eingesetzt werden.

**6.** Polymerdispersionen nach den Ansprüchen 1 bis 5, wobei als vinylaromatische Monomere b) Styrol oder α-Methylstyrol verwendet werden.

**7.** Polymerdispersionen nach den Ansprüchen 1 bis 6, wobei ein Alkylpolyethylenglykol(meth)acrylat c'), der Formel (I)

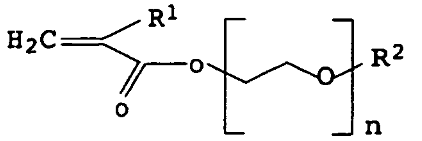

(I),

verwendet wird, wobei $R^1$ für ein Wasserstoffatom oder eine Methylgruppe, $R^2$ für eine Methyl- oder eine Ethylgruppe und n für eine ganze Zahl von 5 bis 55 steht.

**8.** Verwendung von Polymerdispersionen gemäß einem der Ansprüche 1 bis 7, als Zusatz in Baumaterialien auf Basis von hydraulischen Bindemitteln.

**9.** Verwendung von Polymerpulvern oder -granulaten, erhältlich durch Entfernen von mindestens 80 Gew.-% der flüchtigen Bestandteile aus den Polymerdispersionen gemäß einem der Ansprüche 1 bis 8, als Zusatz in Baumaterialien auf Basis von hydraulischen Bindemitteln.

**10.** Verwendung nach einem der Ansprüche 8 oder 9, wobei das hydraulische Bindemittel Zement ist.

**11.** Verfahren zur Verbesserung der mechanischen Festigkeit, Elastizität und Verarbeitbarkeit von Baumaterialien auf Basis hydraulischer Bindemittel, **dadurch gekennzeichnet, dass** man

- wenigstens ein hydraulisches Bindemittel,
- wenigstens eine Polymerdispersion gemäß einem der Ansprüche 1 bis 7 und/oder ein Polymerpulver oder -granulat gemäß dem Anspruch 9, sowie gegebenenfalls
- Wasser und/oder Zuschläge

miteinander vermischt.

**12.** Verfahren nach Anspruch 11, **dadurch gekennzeichnet, dass** die Polymerdispersion, das Polymerpulver oder das Polymergranulat dem Baumaterial auf Basis hydraulischer Bindemittel in einer Menge von 20 bis 200 Gew.-%, bezogen auf das Trockengewicht des hydraulischen Bindemittels zugesetzt wird.

**13.** Verwendung von Polymerdispersionen gemäß den Ansprüchen 1 bis 7 und/oder von Polymerpulvern bzw. Polymergranulaten gemäß dem Anspruch 9 als Zusatz in Baumaterialien auf Basis von hydraulischen Bindemitteln, welche als Dichtungsschlämme eingesetzt werden.

**14.** Verwendung von Polymerdispersionen gemäß den Ansprüchen 1 bis 7 und/oder von Polymerpulvern bzw. Polymergranulaten gemäß dem Anspruch 9 als Zusatz in Bitumen für den Straßenbau, Wasserbau oder für Dachbeschichtungen.

**Claims**

**1.** A polymer dispersion comprising at least one copolymer which comprises, as polymerized monomers,

a) from 25 to 70% by weight of at least one conjugated aliphatic diene,
b) from 25 to 70% by weight of at least one vinylaromatic monomer,
c) from 0.1 to 10% by weight of at least one alkylpolyethylene glycol (meth)acrylate of the formula (I)

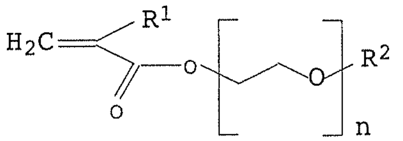

(I),

where $R^1$ is hydrogen or methyl, $R^2$ is $C_1$-$C_4$-alkyl and n is an integer from 1 to 100, or
c') from 2 to 15% by weight of a mixture of the monoester of a $C_2$-$C_{10}$-alkanediol with acrylic acid or methacrylic acid and the alkylpolyethylene glycol (meth)acrylate c),
d) from 0 to 1.0% by weight of ethylenically unsaturated monomers which have at least one acid group, or salts thereof,
e) from 0 to 5.0% by weight of ethylenically unsaturated nitriles and
f) from 0 to 1.0% by weight of amides of $\alpha,\beta$-ethylenically unsaturated mono- and dicarboxylic acids.

**2.** The polymer dispersion according to claim 1, which additionally comprises from 0 to 10% by weight, based on 100% by weight of the copolymer fraction, of at least one polymerizable emulsifier based on allyl alcohol alkoxylates.

**3.** The polymer dispersion according to claim 2, the polymerizable emulsifier used being an allyl alcohol ethoxylate having 5 to 30 ethoxy units or an allyl alcohol propoxylate having 5 to 30 propoxy units.

**4.** The polymer dispersion according to any of claims 1 to 3, the polymerization for its preparation being initiated by an initiator which is present in an amount of more than 0.2 mol %, based on the total amount of the monomers a) to f) used.

**5.** The polymer dispersion according to any of claims 1 to 4, butadiene or isoprene being used as conjugated dienes a).

**6.** The polymer dispersion according to any of claims 1 to 5, styrene or $\alpha$-methylstyrene being used as vinylaromatic monomers b).

**7.** The polymer dispersion according to any of claims 1 to 6, an alkylpolyethylene glycol (meth)acrylate c) of the formula (I)

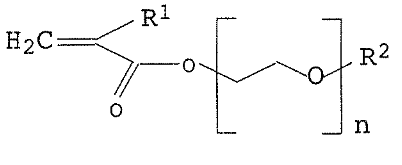

(I),

where $R^1$ is hydrogen or methyl, $R^2$ is methyl or ethyl and n is an integer from 5 to 55, being used.

**8.** The use of the polymer dispersion according to any of claims 1 to 7 as an additive in building materials based on

hydraulic binders.

**9.** The use of polymer powders or polymer granules, obtainable by removing at least 80% by weight of the volatile components from the polymer dispersion according to any of claims 1 to 8, as an additive in building materials based on hydraulic binders.

**10.** The use according to either of claims 8 and 9, the hydraulic binder being cement.

**11.** A process for improving the mechanical strength, elasticity and processibility of building materials based on hydraulic binders, wherein

- at least one hydraulic binder,
- at least one polymer dispersion according to any of claims 1 to 7 and/or a polymer powder or polymer granules according to claim 9 and, if appropriate,
- water and/or additives

are mixed with one another.

**12.** The process according to claim 11, wherein the polymer dispersion, the polymer powder or the polymer granules is or are added to the building material based on hydraulic binder in an amount of from 20 to 200% by weight, based on the dry weight of the hydraulic binder.

**13.** The use of the polymer dispersion according to any of claims 1 to 7 and/or of polymer powders or polymer granules as claimed in claim 9 as an additive in building materials based on hydraulic binders which are used as sealing slurries.

**14.** The use of the polymer dispersion according to any of claims 1 to 7 and/or of polymer powders or polymer granules as claimed in claim 9 as an additive in bitumen for road construction, hydraulic engineering or roof coverings.

## Revendications

**1.** Dispersions de polymère, contenant au moins un copolymère qui contient, comme monomères, à l'état copolymérisé,

a) de 25 à 70 % en poids d'au moins un diène aliphatique conjugué,
b) de 25 à 70 % en poids d'au moins un monomère vinyl-aromatique,
c) de 0,1 à 10 % en poids d'au moins un (méth)acrylate d'alkylpolyéthylèneglycol de la formule (I) :

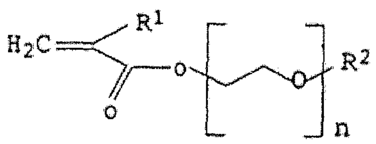

(I),

dans laquelle $R^1$ représente un atome d'hydrogène ou un groupe méthyle, $R^2$ un groupe alkyle en $C_1$-$C_4$ et n un nombre entier de 1 à 100, ou
c') de 2 à 15 % en poids d'un mélange du monoester d'un alcanediol en $C_2$-$C_{10}$ avec de l'acide acrylique ou de l'acide méthacrylique et du (méth)acrylate d'alkylpolyéthylèneglycol c),
d) de 0 à 1,0 % en poids de monomères éthyléniquement insaturés qui présentent au moins un groupe acide ou de leurs sels,
e) de 0 à 5,0 % en poids de nitriles éthyléniquement insaturés, et
f) de 0 à 1,0 % en poids d'amides d'acides monocarboxyliques et dicarboxyliques $\alpha,\beta$-éthyléniquement insaturés.

**2.** Dispersions de polymère suivant la revendication 1, qui contiennent en supplément de 0 à 10 % en poids, par rapport à 100 % en poids de la fraction de copolymère, d'au moins un agent émulsionnant copolymérisable à base d'alcoolates d'alcool allylique.

**3.** Dispersions de polymère suivant la revendication 2, dans lesquelles on utilise, comme agent émulsionnant copolymérisable, un éthoxylate d'alcool allylique comportant 5 à 30 unités éthoxy ou un propoxylate d'alcool allylique comportant 5 à 30 unités propyloxy.

**4.** Dispersions de polymère suivant les revendications 1 à 3, dans lesquelles la polymérisation destinée à leur préparation est déclenchée par un amorceur qui est présent en une quantité de plus de 0,2 % molaire, par rapport à la quantité totale des monomères a) à f) mis en oeuvre.

**5.** Dispersions de polymère suivant les revendications 1 à 4, dans lesquelles on met en oeuvre du butadiène ou de l'isoprène comme diènes conjugués a).

**6.** Dispersions de polymère suivant les revendications 1 à 5, dans lesquelles on utilise du styrène ou de l'$\alpha$-méthylstyrène comme monomères vinyl-aromatiques b).

**7.** Dispersions de polymère suivant les revendications 1 à 6, dans lesquelles on utilise un (méth)acrylate d'alkylpolyéthylèneglycol c) de la formule (I) :

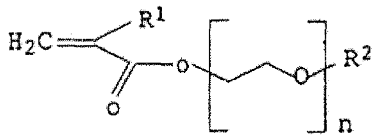

(I),

dans laquelle $R^1$ représente un atome d'hydrogène ou un groupe méthyle, $R^2$ un groupe méthyle ou éthyle et n un nombre entier de 5 à 55.

**8.** Utilisation de dispersions de polymère suivant l'une des revendications 1 à 7, comme additif dans des matériaux de construction à base de liants hydrauliques.

**9.** Utilisation de poudres ou produits de granulation polymères, que l'on peut obtenir par élimination d'au moins 80 % en poids des éléments volatils des dispersions de polymère suivant l'une des revendications 1 à 8, comme additif dans des matériaux de construction à base de liants hydrauliques.

**10.** Utilisation suivant l'une des revendications 8 ou 9, dans laquelle le liant hydraulique est du ciment.

**11.** Procédé d'amélioration de la résistance mécanique, de l'élasticité et de la possibilité de mise en oeuvre de matériaux de construction à base de liants hydrauliques, **caractérisé en ce qu'**on mélange mutuellement

- au moins un liant hydraulique,
- au moins une dispersion de polymère suivant l'une des revendications 1 à 7 et/ou une poudre ou produit de granulation de polymère suivant la revendication 9, ainsi qu'éventuellement
- de l'eau et/ou des agrégats.

**12.** Procédé suivant la revendication 11, **caractérisé en ce que** la dispersion de polymère, la poudre de polymère ou le produit de granulation de polymère est ajouté au matériau de construction à base de liants hydrauliques en une quantité de 20 à 200 % en poids, par rapport au poids à l'état sec du liant hydraulique.

**13.** Utilisation de dispersions de polymère suivant les revendications 1 à 7 et/ou de poudres de polymère ou respectivement de produits de granulation de polymère suivant la revendication 9, comme additif dans des matériaux de construction à base de liants hydrauliques qui sont mis en oeuvre comme badigeons d'étanchéification.

**14.** Utilisation de dispersions de polymère suivant les revendications 1 à 7 et/ou de poudres de polymère ou respectivement de produits de granulation de polymère suivant la revendication 9, comme additif dans des bitumes pour la construction de chaussées, des ouvrages hydrauliques ou des couvertures de toit.